# EUROPEAN PATENT APPLICATION

(11) **EP 4 756 701 A1**
(43) Date of publication of application: **10.06.2026**
(21) Application number: 24872690.3
(22) Date of filing: 23.07.2024
(51) Int. Cl.: G06Q 50/40, G06Q 50/10, B60L 58/12, G06F 17/18, G08B 21/24

(54) **SERVER AND OPERATION METHOD THEREOF**

(30) Priority: 26.09.2023 KR 20230129123; 06.11.2023 KR 20230151951
(71) Applicant: LG Energy Solution, Ltd., Seoul 07335 (KR)
(72) Inventor: KIM, Kang San, Daejeon 34122 (KR); JUNG, Ji Hee, Daejeon 34122 (KR)
(74) Representative: Plasseraud IP
(86) International application number: PCT/KR2024/010595
(87) International publication number: WO 2025/070980

(57) **Abstract**

According to an embodiment disclosed herein, there may be provided a server, which includes a communication circuit, a memory, and a processor operatively connected to the communication circuit and the memory, wherein the processor may be configured to acquire history data related to battery charging of users and information about current driving of a target user, extract features related to charging factors of the users from the history data, set a criterion for determining habituality related to the factor based on the feature, determine habituality of the target user based on the feature of the target user and the criterion, and provide guide information about the habituality of the target user based on at least one of the habituality and history data of the target user and the information about the current driving of the target user.

## Description

### [TECHNICAL FIELD]

### CROSS-REFERENCE TO RELATED APPLICATION

This application claims priority to and the benefit of Korean Patent Applications Nos. 10-2023-0129123 and 10-2023-0151951 filed in the Korean Intellectual Property Office on September 26, 2023 and November 6, 2023, respectively, the entire contents of which are incorporated herein by reference.

### TECHNICAL FIELD

Embodiments disclosed herein relate to a server and a method of operating the same.

### [BACKGROUND ART]

Recently, research and development on secondary batteries has been actively conducted. Here, the secondary battery is a battery capable of charging and discharging and includes conventional Ni/Cd batteries and Ni/MH batteries, and recent lithium ion batteries such as conventional Ni/Cd batteries and Ni/MH batteries. Among the secondary batteries, the lithium-ion batteries have an advantage of having a much higher energy density than the conventional Ni/Cd batteries, the Ni/MH batteries, and the like. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

These batteries are repeatedly charged and discharged, and when the battery is installed in a vehicle, a charging pattern of the battery may vary depending on a driver's tendency. In general, many users tend to have regular charging habits to avoid battery shortage situations.

### [DISCLOSURE]

### [TECHNICAL PROBLEM]

Embodiments disclosed herein are directed to providing a server and a method of operating the same, which can reinforce a user's habit by determining the user's habituality and providing guide information related to the habituality.

The objects of the embodiments disclosed herein are not limited to the above-described objects, and other objects that are not described will be able to be clearly understood by those skilled in the art from the following descriptions.

### [TECHNICAL SOLUTION]

According to an embodiment disclosed herein, there may be provided a server, which includes a communication circuit, a memory, and a processor operatively connected to the communication circuit and the memory, wherein the processor may be configured to acquire history data related to battery charging of users and information about current driving of a target user, extract features related to charging factors of the users from the history data, set a criterion for determining habituality related to the factor based on the feature, determine habituality of the target user based on the feature of the target user and the criterion, and provide guide information about the habituality of the target user based on at least one of the habituality and history data of the target user and the information about the current driving of the target user.

According to an embodiment, the processor may extract, as the feature, a probability density function (PDF) for the factor calculated by applying a kernel density estimation (KDE) technique to the history data.

According to an embodiment, the processor may set the criterion based on a result of clustering the features.

According to an embodiment, the processor may set the criterion based on a maximum probability density value of the features included in each cluster as the result of the clustering.

According to an embodiment, the processor may apply the kernel density estimation by giving a higher weight to data acquired at a time point closer to a current time point among the pieces of history data.

According to an embodiment, the processor may determine the habituality of the target user based on the result of comparing the maximum probability density derived from the feature of the target user with the criterion.

According to an embodiment, the processor may update the features and habit of the target user based on the history data acquired at each charging of the target user.

According to an embodiment, the processor may calculate the remaining depth of discharge based on charging start state of charge (SOC) acquired based on the habituality and the information about the current driving and provide guide information including the remaining depth of discharge.

According to an embodiment disclosed herein, there may be provided a method of operating a server, which include acquiring history data related to battery charging of users and information about current driving of a target user, extracting features related to charging factors of the users from the history data, setting a criterion for determining habituality related to the factor based on the feature, determining habituality of the target user based on the feature of the target user and the criterion, and providing guide information about the habituality of the target user based on at least one of the habituality and history data of the target user and the information about the current driving of the target user.

According to an embodiment, the extracting of the feature may include extracting, as the feature, a probability density function (PDF) for the factor calculated by applying a kernel density estimation (KDE) technique to the history data.

According to an embodiment, the setting of the criterion may include setting the criterion based on a result of clustering the features.

According to an embodiment, the setting of the criterion may include setting the criterion based on a maximum probability density value of the features included in each cluster as the result of the clustering.

According to an embodiment, the extracting of the feature may include applying the kernel density estimation by giving a higher weight to data acquired at a time point closer to a current time point among the pieces of the history data.

According to an embodiment, the determining of the habituality of the target user may include determining habituality of the target user based on a result of comparing a maximum probability density derived from the feature of the target user with the criterion.

According to an embodiment, the providing of the guide information may include calculating the remaining depth of discharge based on charging start state of charge (SOC) acquired based on the habituality and the information about the current driving of the target user and providing guide information including the remaining depth of discharge.

### [ADVANTAGEOUS EFFECTS]

According to the server and the method of operating the same according to the embodiments disclosed herein, it is possible to reinforce the user's habit by determining the user's habituality and providing the guide information related to the habituality.

In addition, various effects that may be directly or indirectly identified through the present document can be provided.

### [DESCRIPTION OF DRAWINGS]

FIG. 1 is a block diagram showing a configuration of an information provision system according to one embodiment disclosed herein.
FIG. 2 is a view showing an example in which a user's feature is extracted according to one embodiment disclosed herein.
FIG. 3 is a view showing an example in which a feature is extracted by applying a weight according to one embodiment disclosed herein.
FIG. 4 is a view showing an example of a result of clustering of features according to one embodiment disclosed herein.
FIG. 5 is a view showing an example of setting a criterion for determining habituality according to one embodiment disclosed herein.
FIG. 6 is a flowchart for describing a method of operating the server according to one embodiment disclosed herein.
FIG. 7 is a block diagram showing a configuration of a server according to one embodiment disclosed herein.

### [MODE FOR INVENTION]

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

The singular form of a noun corresponding to an item in this document may include one item or a plurality of items unless the relevant context clearly dictates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," or "second" may simply be used to distinguish the corresponding component from another and do not limit the corresponding components in another aspect (e.g., importance or order). When a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., in a wired manner), in a wireless manner, or through a third component.

Each (e.g., a module or a program) of components described herein may include a single object or a plurality of objects. According to various embodiments, one or more among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

As used herein, the term "module," or "part" may include a unit implemented in hardware, software, or firmware and may be used interchangeably with terms such as logic, logic block, component, or circuit. The module may be an integrated part or a minimum unit of the parts or a portion thereof that performs one or more functions. For example, according to one embodiment, the module may be implemented in the form of an application-specific integrated circuit (ASIC).

Various embodiments of this document may be implemented as software (e.g., a program or application) including one or more commands stored in a storage medium (e.g., a memory) that may be read by a machine. For example, a processor of the device may fetch at least one command among one or more commands stored from a storage medium and execute the commands. This allows the device to be operated to perform at least one function according to the at least one fetched command. The one or more commands may include code generated by a compiler or code that may be executed by an interpreter. A device-readable storage medium may be provided in the form of a non-transitory storage medium. Here, "non-transitory storage medium" is a tangible device and only means not including a signal (e.g., electromagnetic waves), and this term does not distinguish between cases in which data is stored semi-permanently and temporarily in the storage medium.

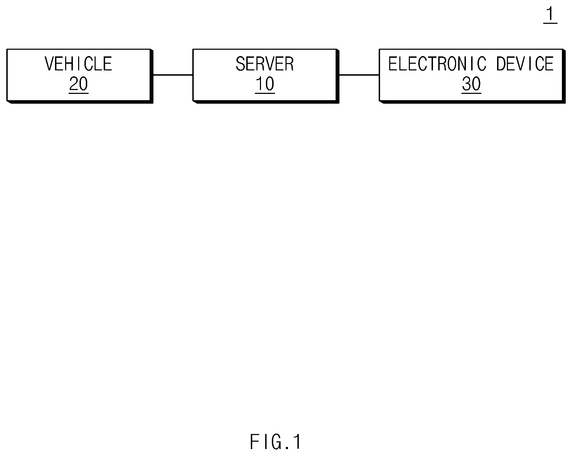

FIG. 1 is a block diagram showing a configuration of an information provision system according to one embodiment disclosed herein.

Referring to FIG. 1, an information provision system 1 may include a server 10, a battery 20, and an electronic device 30.

The information provision system 1 may acquire and analyze history data related to battery charging of users and set a criterion for determining the users' habituality. In addition, the information provision system 1 may acquire history data related to charging of a target user and information about current driving of the target user, determine the habit of the target user, and provide guide information about habituality. Therefore, the information provision system 1 may induce reinforcement of the habituality of the target user.

The server 10 may acquire pieces of history data of users and information about the current driving of the target user. The server 10 may analyze the acquired data and information, determine the habituality of the target user, and provide guide information.

A battery may be a battery installed in a vehicle and may be a battery pack or a battery module. For example, a vehicle 20 may be provided with an on-board diagnostics (OBD) device for acquiring data, and the server 10 may receive charging history data and/or driving-related information from the OBD device.

The electronic device 30 may be a user terminal carried by a user. The electronic device 30 may include various types of devices capable of performing data communication. For example, the electronic device 30 may include portable devices such as smartphones or tablets, computer devices such as desktops or laptops, multimedia devices, cameras, wearable devices, virtual reality (VR) devices, etc., and is not limited to the above-described devices. For example, the electronic device 30 may include a server or gateway that may transmit data packets through an application.

For example, the user may be a person registered in the information provision system 1. As an example, the user may be a person who has subscribed to an application provided by an operator of the information provision system 1. The user may use services provided by the server 10 using the electronic device 30. For example, the service may include an information provision service. To this end, an application for using an information provision service may be installed on the electronic device 30.

The user may execute the application on the electronic device 30 to subscribe to the information provision service and confirm his or her type and guide information. The application installed on the electronic device 30 may be an application provided by an operational entity (e.g., a battery manufacturer) of the information provision system 1.

Hereinafter, an operation of the server 10 will be described in detail.

The server 10 may acquire history data related to the battery charging of the users and information about the current driving of the target user. For example, the server 10 may receive history data and driving-related information from a component of a battery management system (BMS), a vehicle BMS, an OBD, a charger, etc. provided in the battery pack through a communication circuit.

The server 10 may acquire and store the history data related to the battery charging of the users. The history data related to the battery charging may include various pieces of information such as charging start state of charge (SOC), charging end SOC, and a charging time.

The target user may be a user for providing guide information. More specifically, the target user may be a user who has subscribed to the information provision service. The information about the current driving may include various pieces of information such as driving start SOC, current remaining SOC, a driving time, and a distance to empty.

The server 10 may extract features related to charging factors of the users from the pieces of history data of the users. The charging factor may be a factor for defining charging-related habit. The server 10 may analyze the data and analyze habituality for the charging factor. The charging factor may include, for example, charging start SOC, charging end SOC, a charging time, a charging day, etc. Hereinafter, for the convenience of description, the charging factor will be described as the charging start SOC.

According to an embodiment, the server 10 may extract, as a feature, a probability density function (PDF) for a factor calculated by applying a kernel density estimation (KDE) technique to the history data. The kernel density estimation is a technique used when calculating the distribution of data and may calculate the distribution of the data to be analyzed using a kernel represented as a probability density.

The server 10 may calculate the distribution of the history data as a probability density function using the kernel density estimation. The server 10 may calculate a continuous probability density function even when the value of the history data is discontinuous.

According to an embodiment, the server 10 may apply the kernel density estimation by giving a higher weight to data acquired at a time point closer to a current time point among the pieces of history data. Therefore, the server 10 may reduce recent data dependency. That is, since the user's recent data further reflects the user's habit at the current time point, the server 10 can more accurately determine the user's current habit by giving a higher weight to data acquired at the recent time point.

The server 10 may set a criterion for determining habituality related to a factor based on the extracted features.

According to an embodiment, the server 10 may set a criterion for determining habituality based on the result of clustering the features extracted from the users. The server 10 may acquire the probability density functions of the users and perform clustering according to their shapes, maximum probability density, etc. The server 10 may classify the features of the users into a plurality of clusters through clustering, and each cluster can exhibit different habituality for the charging factor of the user.

For example, when the charging factor is the charging start SOC, the plurality of clusters classified as a result of clustering by the server 10 can exhibit different habituality for the charging start SOC. As an example, the plurality of clusters may be classified into a cluster with a habit of the charging start SOC, a cluster without a habit of the charging start SOC, and a cluster with an ambiguous habit of the charging start SOC.

According to an embodiment, the server 10 may set a criterion based on the maximum probability density value of the features included in each cluster as a result of clustering the features. The server 10 may analyze the maximum probability density value of the features included in each cluster classified as a result of the clustering. The server 10 may analyze the maximum probability density value and set a criterion for determining (classifying) habituality.

For example, the server 10 may set, to a first criterion value, a maximum value of the maximum probability density among the features included in the cluster without the habit of the charging start SOC and set, to a second criterion value, a minimum value of the maximum probability density among the features included in the cluster with the habit of the charging start SOC.

The server 10 may determine the habituality of the target user based on the feature of the target user and the set criterion.

According to an embodiment, the server 10 may determine the habituality of the target user based on the result of comparing the maximum probability density derived from the feature of the target user with the criterion. The habituality of the target user may include, for example, information such as the presence or absence of a habit of charging start SOC and charging start habit SOC.

As an example, when the maximum probability density of the target user is the first reference value or less, the server 10 may determine that the target user does not have the habit of the charging start SOC. In another example, when the maximum probability density of the target user is the second reference value or more, the server 10 may determine that the target user has the habit of the charging start SOC and determine that SOC having the maximum probability density is the charging start habit SOC of the target user.

According to an embodiment, the server 10 may update the features and habit of the target user by reflecting the history data acquired at each charging of the target user. The server 10 may update the features and habit of the target user each time additional history data of the target user is acquired and provide the habituality of the target user and guide information more accurately. In one embodiment, the server 10 may give a higher weight to newly acquired history data than to previously acquired history data.

The server 10 may provide guide information about the habituality of the target user based on at least one of the habituality and history data of the target user and the information about the current driving of the target user. The server 10 may compare the habits for the charging factors included in the habituality of the target user with the pieces of data on the charging factors included in the history data and/or the driving-related information and analyze and provide guide information.

According to an embodiment, the server 10 may calculate the remaining depth of discharge based on the charging start SOC acquired based on the habituality of the target user and the information about the current driving of the target user.

As an example, the server 10 may calculate the remaining depth of discharge (DOD) from the charging start habit SOC and the driving start SOC according to the user's habituality and provide the user with the remaining DOD from a driving start time point to a charging time point according to the habit of the target user.

As another example, the server 10 may calculate the remaining DOD from the charging start habit SOC and the current SOC according to the user's habituality and provide the user with the remaining DOD from the current time point to the charging time point according to the habit.

As still another example, the server 10 may calculate the remaining DOD from the charging start habit SOC and driving end SOC according to the user's habituality and provide the user with the remaining DOD up to the charging time point according to the habit during subsequent driving.

As described above, the server 10 may provide guide information including the remaining DOD and thus induce the reinforcement of the user's habit related to charging.

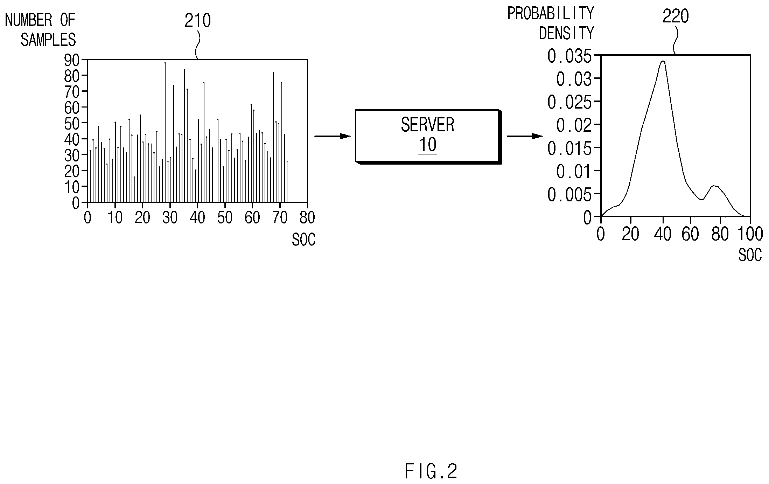

FIG. 2 is a view showing an example in which a user's feature is extracted according to one embodiment disclosed herein.

Referring to FIG. 2, the server 10 may extract features related to charging factors of the users from the pieces of history data of the users.

The server 10 may extract data on charging factors from the history data of each user. 210 of FIG. 2 exemplarily shows data on charging factors of the user when the charging factor is the charging start SOC, in which an x-axis represents the charging start SOC and a y-axis represents the number of samples.

The server 10 may extract the user's features from charging factor data. In an embodiment, the server 10 may calculate the probability density function by applying the kernel density estimation (KDE) technique to the charging factor data and extract the calculated probability density function as the user's feature. For example, the server 10 may represent the feature of each user as a probability density function for the charging factor as in 220 of FIG. 2.

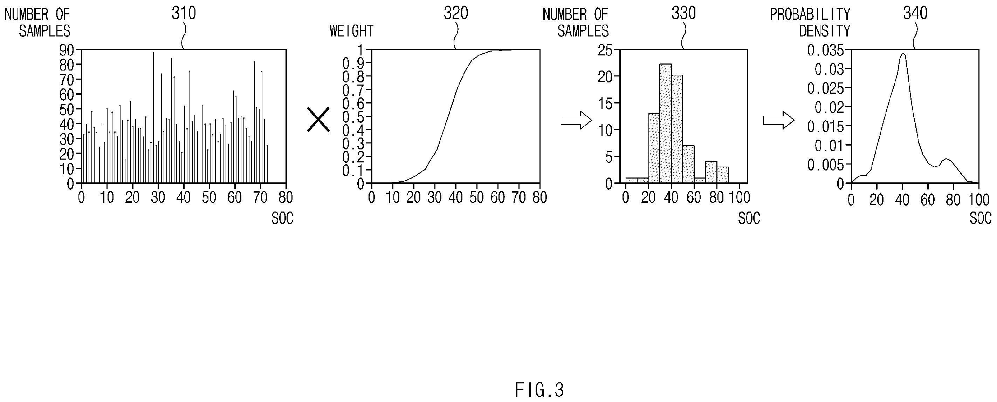

FIG. 3 is a view showing an example in which a feature is extracted by applying a weight according to one embodiment disclosed herein.

Referring to FIG. 3, the server 10 may apply the kernel density estimation by giving a higher weight to data acquired at a time point closer to the current time point among the pieces of history data.

The server 10 may apply a weight function 320 to data 310 on the charging factor. The weight function 320 may be set to have a higher value as it gets closer to the current time point, and for example, the server 10 may represent the data on the charging factor as a histogram 330 by multiplying the data 310 on the charging factor by the weight function 320.

The server 10 may calculate a probability density function 340 by applying the kernel density estimation technique to the histogram 330 on the charging factor.

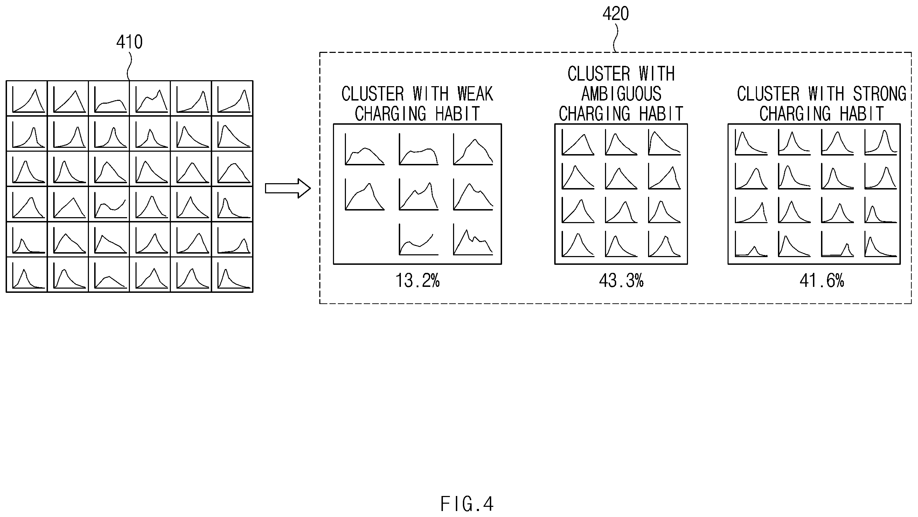

FIG. 4 is a view showing an example of a result of clustering of features according to one embodiment disclosed herein.

Referring to FIG. 4, the server 10 may cluster features. 410 of FIG. 4 shows features extracted from the pieces of history data of the users, and 420 shows an example of a result of clustering the features.

According to an embodiment, the server 10 may perform clustering according to the maximum probability density value included in the features of the users. For example, the server 10 may classify users into a cluster with a weak charging habit, a cluster with a strong charging habit, and a cluster with an ambiguous habit according to a result of clustering the user's features as in 420 of FIG. 4. For example, the cluster with the strong charging habit may be classified as including users with a large maximum probability density value.

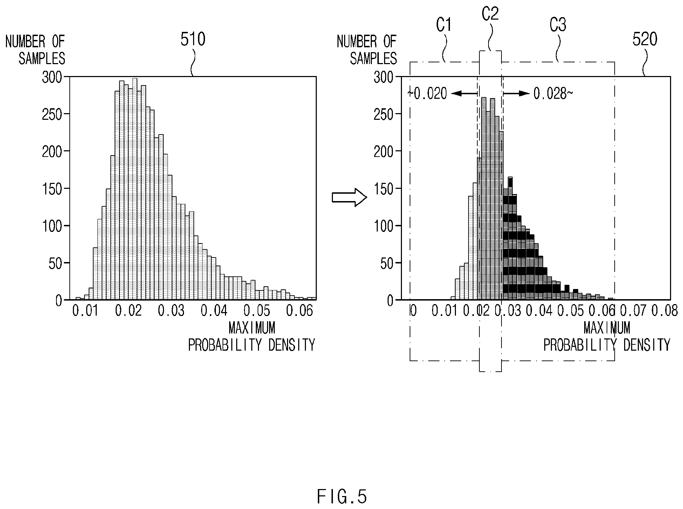

FIG. 5 is a view showing an example of setting a criterion for determining habituality according to one embodiment disclosed herein.

Referring to FIG. 5, the server 10 may set a criterion for determining habituality based on the maximum probability density value of each cluster as a result of the clustering.

510 of FIG. 5 is a graph showing the maximum probability density value of each user, in which an x-axis may represent the maximum probability density and a y-axis may represent the number of samples. The server 10 may set a criterion for determining habituality according to the result of the clustering and the maximum probability density value.

The server 10 may represent the maximum probability density of each user as a graph as in 520 of FIG. 5. For example, the server 10 may cluster the features of the users and separately represent the maximum probability densities of the features included in each cluster. As an example, in 520 of FIG. 5, data marked by C1 may be data of users included in the cluster without the charging start habit, and data marked by C3 may be data of users included in the cluster with the charging start habit.

In one embodiment, the server 10 may set, to the first reference value for determining habituality, the maximum value among the maximum probability densities of users included in the cluster C1 without the charging start habit. In addition, the server 10 may set, to the second reference value for determining habituality, the minimum value among the maximum probability densities of users included in the cluster C3 without the charging start habit. For example, in 520 of FIG. 5, the first reference value may be set to 0.020 and the second reference value may be set to 0.028.

The server 10 may determine the habituality of the target user based on the result of comparing the maximum probability density derived from the feature of the target user with the criterion. For example, in FIG. 5, the server 10 may determine that the charging habit of the target user is weak when the maximum probability density value of the target user is smaller than 0.020 and determine that the charging habit is strong when the maximum probability density value is larger than 0.028.

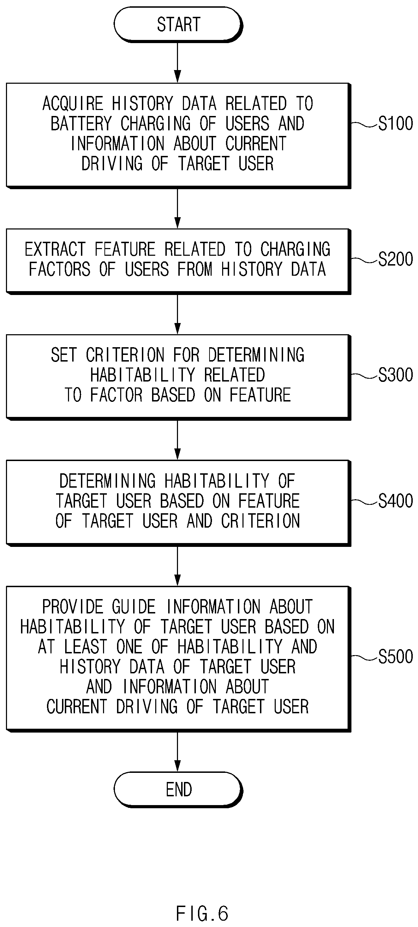

FIG. 6 is a flowchart for describing a method of operating the server according to one embodiment disclosed herein.

Referring to FIG. 6, the method of operating the server may include acquiring history data related to battery charging of users and information about current driving of a target user (S 100), extracting features related to charging factors of users from the history data (S200), setting a criterion for determining habituality related to the factor based on the feature (S300), determining habituality of the target user based on the feature of the target user and the criterion (S400), and providing guide information about the habituality of the target user based on the habituality and history data of the target user and the information about the current driving of the target user (S500).

In operation S 100, the server 10 may acquire pieces of charging history data of the users and the information about the current driving of the target user. For example, the server 10 may acquire information from the BMS of the battery, a charging and discharging device, etc.

In operation S200, the server 10 may extract features related to charging factors of the users from the pieces of history data. According to an embodiment, the server 10 may extract, as a feature of each user, a probability density function (PDF) calculated by applying kernel density estimation (KDE) technique to the pieces of history data of the users.

In operation S300, the server 10 may set the criterion for determining habituality related to the factor based on the feature. According to an embodiment, the server 10 may set the criterion based on a result of clustering the features.

In operation S400, the server 10 may determine the habituality of the target user based on the feature of the target user and the criterion. According to an embodiment, the server 10 may determine the habituality of the user based on the result of comparing the maximum probability density included in the feature of the target user with the criterion.

In operation S500, the server 10 may provide guide information about the habituality of the target user based on at least one of the habituality and history data of the target user and the information about the current driving of the target user. According to an embodiment, the server 10 may calculate the remaining depth of discharge based on the charging start SOC acquired based on the habituality of the target user and the information about the current driving of the target user and provide guide information including the remaining depth of discharge.

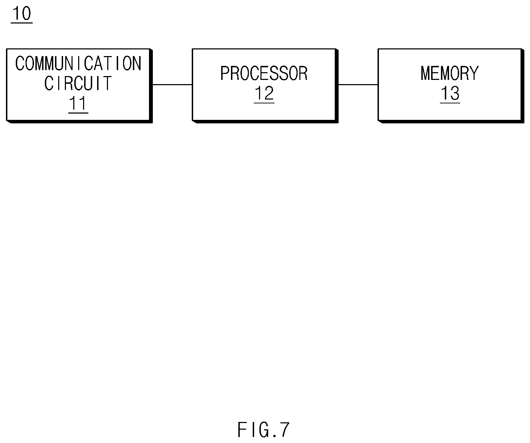

FIG. 7 is a block diagram showing a configuration of a server according to one embodiment disclosed herein.

Referring to FIG. 7, the server 10 according to one embodiment may include a communication circuit 11, a processor 12, and a memory 13.

The communication circuit 11 may support the establishment of wired or wireless communication connection between the server 10 and an external electronic device (e.g., a vehicle or an electronic device) and communication execution through the established connection. According to one embodiment, the communication circuit 11 may include a wireless communication circuit (e.g., a cellular communication circuit, a short range wireless communication circuit, or a global navigation satellite system (GNSS) communication circuit) or a wired communication circuit (e.g., a local area network (LAN) communication circuit or a power line communication circuit) and communicate with the external electronic device through a short range communication network, such as Bluetooth, WiFi direct, or infrared data association (IrDA), or a long distance communication network, such as a cellular network, an Internet, a computer network, using the corresponding communication circuit among the above communication circuits. Various types of the communication circuits 11 may be implemented as one chip or may each be implemented as a separate chip. According to one embodiment, the communication circuit 11 of the server 10 may communicate with the vehicle 20 and the electronic device 30 of FIG. 1.

The processor 12 may control the overall operation of the server 10. In various embodiments, the processor 12 may include one processor core (single core) or include a plurality of processor cores. For example, the processor 12 may include a multi-core, such as a dual-core, a quad-core, or a hexa-core. According to embodiments, the processor 12 may further include a cache memory located internally or externally. According to embodiments, the processor 12 may be configured as one or more processors. For example, the processor 12 may include at least one of an application processor, a communication processor, or a graphical processing unit (GPU).

All or some of the processors 12 may be electrically or operatively coupled with or connected to other components (e.g., the communication circuit 11 or the memory 13) in the server 10. The processor 12 may receive commands of other components, interpret the received commands, and perform calculations or process data according to the interpreted commands. The processor 12 may interpret messages, data, commands, or signals received from the communication circuit 11 and the memory 13. The processor 12 may generate new messages, data, commands, or signals based on the received messages, data, commands, or signals. The processor 12 may provide the processed or generated messages, data, commands, or signals to the communication circuit 11 or the memory 13.

The processor 12 may process data or signals generated or generated by a program. For example, the processor 12 may request commands, data, or signals to the memory 13 to execute or control the program. The processor 12 may record (or store) or update commands, data, or signals in the memory 13 to execute or control the program. According to one embodiment, the processor 12 may analyze the pieces of history data of the users stored in the memory 13 and set the criterion for determining habituality.

The memory 13 may store commands, control command code, control data, or user data for controlling the server 10. For example, the memory 13 may include at least one of an application program, an operating system (OS), middleware, or a device driver. The memory 13 may include one or more of a volatile memory and a non-volatile memory. The volatile memory may include a dynamic random access memory (DRAM), a static RAM (SRAM), a synchronous DRAM (SDRAM), a phase-change RAM (PRAM), a magnetic RAM (MRAM), a resistive RAM (RRAM), a ferroelectric RAM (FeRAM), etc. The non-volatile memory may include a read only memory (ROM), a programmable ROM (PROM), an electrically programmable ROM (EPROM), an electrically erasable programmable ROM (EEPROM), a flash memory, etc. The memory 13 may further include a non-volatile medium such as a hard disk drive (HDD), a solid state disk (SSD), an embedded multi - media card (eMMC), or a universal flash storage (UFS). According to one embodiment, the memory 13 may store the history data related to the users' charging.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of this document.

## Claims

1. A server comprising:
a communication circuit;
a memory; and
a processor operatively connected to the communication circuit and the memory,
wherein the processor is configured to:
acquire history data related to battery charging of users and information about current driving of a target user;
extract features related to charging factors of the users from the history data;
set a criterion for determining habituality related to the factor based on the feature;
determine habituality of the target user based on the feature of the target user and the criterion; and
provide guide information about the habituality of the target user based on at least one of the habituality and history data of the target user and the information about the current driving of the target user.

2. The server of claim 1, wherein the processor extracts, as the feature, a probability density function (PDF) for the factor calculated by applying a kernel density estimation (KDE) technique to the history data.

3. The server of claim 2, wherein the processor sets the criterion based on a result of clustering the features.

4. The server of claim 3, wherein the processor sets the criterion based on a maximum probability density value of the features included in each cluster as the result of the clustering.

5. The server of claim 2, wherein the processor applies the kernel density estimation by giving a higher weight to data acquired at a time point closer to a current time point among the pieces of the history data.

6. The server of claim 1, wherein the processor determines habituality of the target user based on a result of comparing a maximum probability density derived from the feature of the target user with the criterion.

7. The server of claim 1, wherein the processor updates the feature and habituality of the target user based on the history data acquired at each charging of the target user.

8. The server of claim 1, wherein the processor calculates the remaining depth of discharge based on charging start state of charge (SOC) acquired based on the habituality and the information about the current driving and provides guide information including the remaining depth of discharge.

9. A method of operating a server, comprising:
acquiring history data related to battery charging of users and information about current driving of a target user;
extracting features related to charging factors of the users from the history data;
setting a criterion for determining habituality related to the factor based on the feature;
determining habituality of the target user based on the feature of the target user and the criterion; and
providing guide information about the habituality of the target user based on at least one of the habituality and history data of the target user and the information about the current driving of the target user.

10. The method of claim 9, wherein the extracting of the feature includes extracting, as the feature, a probability density function (PDF) for the factor calculated by applying a kernel density estimation (KDE) technique to the history data.

11. The method of claim 10, wherein the setting of the criterion includes setting the criterion based on a result of clustering the features.

12. The method of claim 11, wherein the setting of the criterion includes setting the criterion based on a maximum probability density value of the features included in each cluster as the result of the clustering.

13. The method of claim 10, wherein the extracting of the feature includes applying the kernel density estimation by giving a higher weight to data acquired at a time point closer to a current time point among the pieces of the history data.

14. The method of claim 9, wherein the determining of the habituality of the target user includes determining habituality of the target user based on a result of comparing a maximum probability density derived from the feature of the target user with the criterion.

15. The method of claim 9, wherein the providing of the guide information includes calculating the remaining depth of discharge based on charging start state of charge (SOC) acquired based on the habituality and the information about the current driving and providing guide information including the remaining depth of discharge.
